# EUROPÄISCHE PATENTSCHRIFT

(11) **EP 3 722 642 B1**
(45) Veröffentlichungstag und Bekanntmachung des Hinweises auf die Patenterteilung: **23.02.2022**
(21) Anmeldenummer: 19168297.0
(22) Anmeldetag: 10.04.2019
(51) Int. Cl.: F16K 25/00, F16K 1/22, F16K 27/02

(54) **ABSPERRKLAPPE**
BUTTERFLY VALVE
VANNE PAPILLON

(43) Veröffentlichungstag der Anmeldung: 14.10.2020
(73) Patentinhaber: Georg Fischer Rohrleitungssysteme AG, 8201 Schaffhausen (CH)
(72) Erfinder: Jäckle, Timo, 78247 Hilzingen (DE); Bürgi, Stefan, 8254 Basadingen (CH)
(74) Vertreter: Fenner, Seraina

(56) Entgegenhaltungen:
- EP-A1- 3 489 555
- JP-A- S6 262 061
- JP-A- 2016 070 400

## Beschreibung

Die Erfindung betrifft eine Absperrklappe zum Absperren oder Regeln eines Mediums welches eine Rohrleitung durchströmt, beinhaltend ein Gehäuse, wobei das Gehäuse einteilig ausgebildet ist und vorzugsweise aus Kunststoff ist, einen Teller und eine Achse, wobei der Teller entlang der Achse zwischen einer Offenstellung und einer Schliessstellung schwenkbar ist.

Im Rohrleitungsbau werden Absperrklappen eingesetzt um Rohrleitungen, die flüssige oder gasförmige Medien transportieren zu schliessen bzw. den Durchfluss zu regeln. Dazu ist es notwendig, dass die Klappen dem Druck in den Rohrleitungen standhalten.

Die JP 6387493 B2 offenbart eine Absperrklappe in der die Klappe Metallplatten im Inneren zum Erreichen einer hohen Festigkeit aufweist und um die Klappe vor dem Korrodieren zu schützen ist die Klappe mit einer korrosionsbeständigen Schicht beschichtet.

Auch in der JP 3123908 ist eine Klappe offenbart, die einen Metallkern aufweist und von einer Kunststoffschicht umgeben ist.

JP S6262061 A und JP 2018 013165 A offenbaren weiter Absperrklappen mit einer äußeren Kunststoffschicht.

Im oben aufgeführten Stand der Technik wird die äussere Schicht zum Schutz vor einer Korrosion auf die aus Metall bestehenden Klappen aufgebracht.

Nachteilig hierbei ist, das hohe Gewicht der Absperrklappe wie auch, dass sich beim Ablösen der Kunststoffschicht eine Korrosion bilden kann und die Absperrklappe nicht mehr den Anforderungen standhält.

Es ist Aufgabe der Erfindung eine Absperrklappe und deren Herstellverfahren vorzuschlagen, welche dem in den Rohrleitungen auftretenden Innendrücken standhält sowie mediumsbeständig und einfach im Zusammenbau ist.

Diese Aufgabe wird erfindungsgemäss dadurch gelöst, dass der Teller einen Kern aus Kunststoff und einen Mantel aus Kunststoff aufweist, wobei der Kunststoff des Kerns und der Kunststoff des Mantels nicht identisch sind, wobei der Kern eine Rippenstruktur mit Aussparungen und Stegen aufweist, wobei die Aussparungen zwischen den Stegen durchgehend sind und die Achse als im Gehäuse gelagerte Steckachse und als ein separates Teil ausgebildet ist und durch den kompletten Teller hindurch ragt, und dass beim Herstellverfahren der erfindungsgemässen Absperrklappe die Achse als Steckachse durch den Teller hindurchgesteckt wird.

Die erfindungsgemässe Absperrklappe weist ein Gehäuse auf, wobei das Gehäuse einteilig ausgebildet ist. Das bringt den Vorteil, dass keine zusätzlichen Montageschritte benötigt werden wie auch kein zusätzliches Dichtelement eingebaut werden muss. Vorzugsweise ist das Gehäuse aus Kunststoff hergestellt.

Die erfindungsgemässe Absperrklappe weist einen Teller auf, der dem Öffnen und Schliessen der Absperrklappe dient und dadurch den Durchfluss des Mediums in der Rohrleitung regelt. Zum Öffnen und Schliessen lässt sich der Teller um eine Achse schwenken, wobei die Achse vorzugsweise horizontal oder vertikal verläuft. Die Absperrklappe weist vorzugsweise eine zentrische oder eine exzentrische Bauweise auf, das heisst, dass der Drehpunkt des Tellers bei geschlossener Absperrklappe in der Mitte des Tellers entlang der Rohrleitungsachse wie auch aus der Mitte versetzt entlang der Rohrleitungsachse sein kann. Der Teller weist einen Kern und einen Mantel auf, wobei der Kern und der Mantel jeweils aus einem anderen Kunststoff hergestellt sind. Um den Anforderungen der hohen Festigkeit wie auch der Beständigkeit gegenüber dem Medium gerecht zu werden, ist der Kern aus einem zähen, hochfesten Kunststoff und der Kunststoff des Mantels weist eine gute Mediumbeständigkeit auf. Der Teller wird mittels dem Mehrkomponentenspritzgiessverfahren hergestellt. Selbstverständlich kann der Teller auch im Einlegeverfahren hergestellt werden, das heisst, dass der Kern separat gespritzt wird und anschliessend in einer anderen Form mit dem Kunststoff des Mantels umspritzt wird. Der Kunststoff des Kerns weist eine höhere Festigkeit auf als der Kunststoff des Mantels, mit dem der Kern umspritzt wird. Der Kern und der Mantel weisen unterschiedliche Kunststoffe auf. Vorzugsweise weist der Kern einen Kunststoff mit einer Verstärkung auf und der Mantel besteht vorzugsweise aus einem nicht verstärkten teilkristallinen oder amorphen Kunststoff.

Es ist von Vorteil, wenn der Mantel die Aussenfläche bzw. die Fläche des Kerns welche mit dem Medium in Kontakt kommt, vollständig umgibt, dies gewährt dem Kern einen guten Schutz vor dem Medium. Der Kunststoff des Mantels füllt die Aussparungen bzw. Hohlräume zwischen den Stegen in der Rippenstruktur aus, die der Kern vorzugsweise aufweist. Die Rippenstruktur des Kerns und dadurch, dass der Kunststoff des Mantels um die Rippen und in den Aussparungen sowie auf der Aussenseite des Kerns angeordnet ist, weist der Mantel und Kern eine Netzstruktur auf, wodurch gewährleistet ist, dass der Mantel sich nicht vom Kern ablöst. Der Mantel und Kern sind vorzugsweise miteinander formschlüssig verbunden. Zwischen dem Mantel und dem Kern besteht vorzugsweise kein Stoffschluss.

Der Teller weist eine durchgehende Bohrung auf. Die Bohrung dient der Aufnahme der Steckachse.

### Wie bereits oben erwähnt ist der Teller vorzugsweise als ein

Mehrkomponentenspritzgussteil ausgebildet, speziell bevorzugt als ein Zweikomponentenspritzgussteil, welches einen Kunststoff für den Kern und einen anderen für den Mantel vorsieht um den entsprechenden Anforderungen gerecht zu werden.

Damit der Kern zäh und hochfest ausgebildet ist, ist der Kern vorzugsweise aus einem verstärkten Kunststoff gebildet, vorzugsweise faser- oder kugelverstärkt, speziell bevorzugt mit Glas- oder Karbonfasern.

Vorzugsweise ist der Mantel aus einem Medium beständigen Kunststoff gebildet, vorzugsweise aus einem teilkristallinen oder amorphen Kunststoff ohne Verstärkung.

Gemäss einer bevorzugten Ausgestaltung weist der Kern eine Rippenstruktur auf, wobei die Aussparungen zwischen den Stegen von der einen Kernoberseite zur anderen Kernoberseite hin, durchgehend offen sind. Diese Rippenstruktur bringt den Vorteil mit sich, dass der Kunststoff des Mantels sich in den Aussparungen und um die Rippen anordnet. Dies bringt eine Vernetzung der beiden Kunststoffe und eine optimale Befestigung des Mantels am Kern, wobei der Kunststoff sich auch um die Oberseiten des Kerns anordnet und so ein geschlossener Mantel um den Kern bildet, vorzugsweise mit einer innenliegenden Vernetzung des Mantelkunststoffs und des Kerns, wodurch sich der Mantel nicht vom Kern ablösen kann. Der Kern und der Mantel weisen vorzugsweise einen Formschluss auf. Es ist vorteilhaft, wenn die beiden Kunststoffe keinen Stoffschluss eingehen.

Vorzugsweise ist die Achse als Steckachse ausgebildet, wobei die Steckachse als separates Teil ausgebildet ist und durch den Teller bzw. die Bohrung im Teller hindurchgesteckt ist, wobei die Steckachse im Gehäuse gelagert ist. Diese Bauweise mit einer Steckachse, welche durch den kompletten Teller hindurchragt, bringt den Vorteil einer einfachen Montage mit sich sowie dass der Teller bei einem Defekt einfach ausgewechselt werden kann. Die Steckachse ist vorzugsweise aus einem metallischen Werkstoff hergestellt, vorzugsweise Stahl.

Als eine bevorzugte Ausführungsform hat sich gezeigt, dass die Steckachse formschlüssig mit dem Teller verbunden ist. Dies ermöglicht die Schwenkbewegung des Tellers über die Steckachse einzuleiten, die den Teller dann entsprechend mit dreht. Vorzugsweise weist die Steckachse dazu mindestens eine gerade Fläche auf die mit einer geraden Fläche in der Bohrung des Tellers korrespondiert. Dadurch ist durch blosses Einstecken der Steckachse das Mitdrehen des Tellers gewährleistet.

Das erfindungsgemässe Verfahren zur Herstellung einer Absperrklappe weist folgende Schritte auf:
- Herstellen eines einteiligen Gehäuses, vorzugsweise im Spritzgussverfahren,
- Herstellen eines Tellers, wobei der Teller imZweikomponentenspritzgussverfahren hergestellt wird,
- Montage des Tellers im Gehäuse, wobei eine Steckachse durch das Gehäuse und den Teller hindurchgesteckt wird, wobei die Enden der Steckachse im Gehäuse gelagert werden und die Steckachse die Schwenkachse des Tellers bildet.

Ein Ausführungsbeispiel der Erfindung wird anhand der Figuren beschrieben, wobei sich die Erfindung nicht nur auf das Ausführungsbeispiel beschränkt. Es zeigen:
Fig. 1 einen Längsschnitt durch eine erfindungsgemässe Absperrklappe,
Fig. 2 ein dreidimensionaler Teilschnitt eines Tellers,
Fig. 3 eine Draufsicht eines Tellers und
Fig. 4 eine Explosionsansicht einer erfindungsgemässen Absperrklappe.

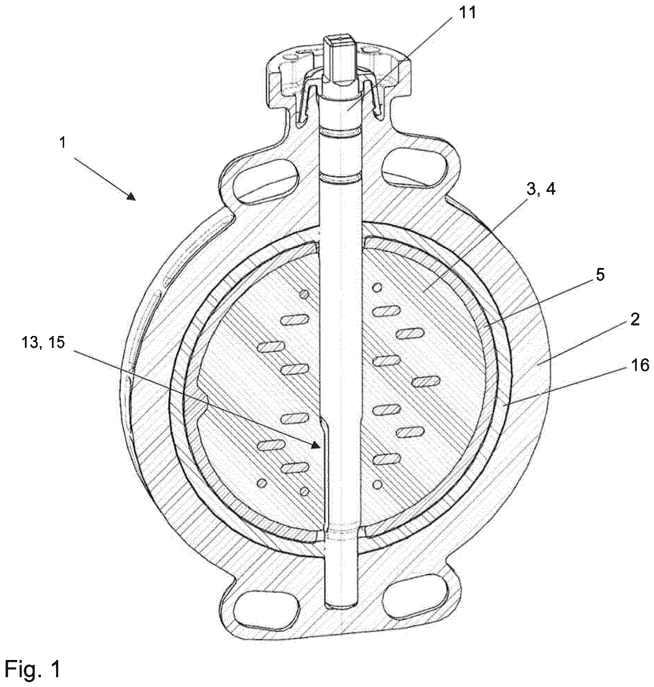

Die in Fig. 1 dargestellte Zeichnung zeigt einen Längsschnitt durch eine erfindungsgemässe Absperrklappe 1. Die Absperrklappe 1 dient dem Absperren und Regeln eines Mediums welches eine Rohrleitung durchströmt. Die Absperrklappe 1 weist ein Gehäuse 2 auf, wobei das Gehäuse 2 einteilig ausgebildet ist. Dies hat den Vorteil, dass zusätzliche Dichtungen entfallen wie auch, dass die Montage einer Absperrklappe 1 einfach und wirtschaftlich erfolgen kann. Das Gehäuse 2 ist vorzugsweise aus Kunststoff ausgebildet, wobei auch andere Werkstoffe wie Metall oder Verbundmaterialien denkbar sind. Zur optimalen Abdichtung der Absperrklappe 1 ist eine Dichtung 16 im Gehäuse 2 angeordnet. Um den Durchfluss des Mediums zu sperren oder zu Regeln weist die Absperrklappe 1 einen Teller 3 auf. Der Teller 3 lässt sich entlang der Achse 11 schwenken. Die abgebildete Ausführungsform zeigt eine zentrische Absperrklappe 1, wobei auch exzentrische Ausführungen denkbar sind bei der die Achse nicht durch die Mitte des Tellers in Bezug auf die Dicke des Tellers verläuft, sondern versetzt dazu. Der Teller 3 weist einen Kern 4 und einen Mantel 5 auf, wobei der Mantel 5 und der Kern 4 nicht aus demselben Kunststoff bestehen. Der Kern 4 weist einen Kunststoff auf mit einer hohen bzw. höheren Festigkeit wie der Kunststoff des Mantels 5 aufweist. Vorzugsweise wird dies dadurch erreicht, dass der Kunststoff des Kerns 4 eine Verstärkung aufweist beispielsweise Kugeln oder Fasern oder andere bekannte Verstärkungselemente.

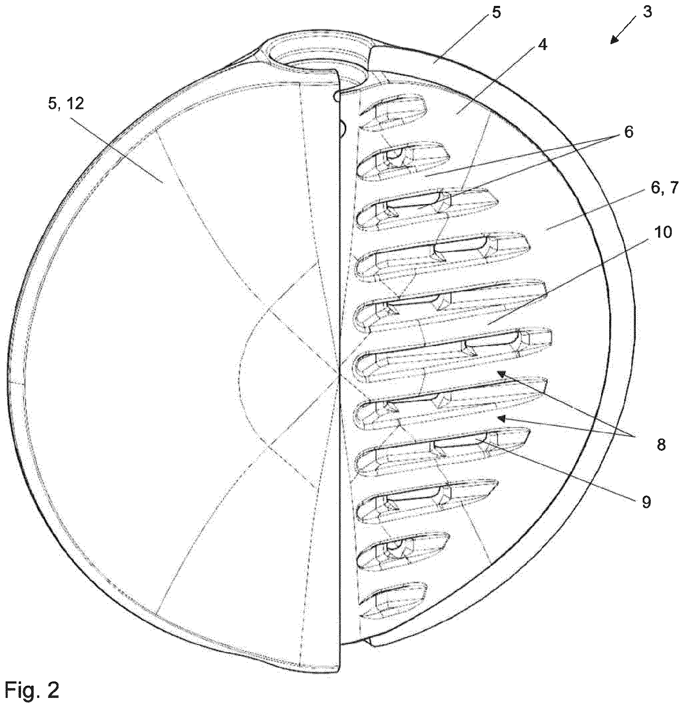

Fig. 2 zeigt den Teller 3 der erfindungsgemässen Absperrklappe 1 in einem Teilschnitt. Gut ersichtlich ist die Rippenstruktur 8 des Kerns 4 auf der vom Mantel 5 freigeschnittenen Hälfte. Zwischen den Stegen 10 verlaufen die Aussparungen 9, wobei sich diese durchgehend von der einen Oberseite 7 des Kerns 4 bis hin zur anderen Oberseite 7 des Kerns 4 erstrecken. Dies bringt den Vorteil mit sich, dass der Kunststoff des Mantels 5 sich in den Aussparungen 9 anordnet bzw. diese füllt und so die eine Aussenschicht 12 des Mantels 5 mit der anderen Aussenschicht 12 des Mantels 5 durch den Kern 4 hindurch miteinander verbindet. Diese Vernetzung des Tellers 3, der aus mindestens zwei Kunststoffen gebildet ist und als Mehrkomponentenspritzgussteil ausgebildet ist, bildet einen Formschluss und verhindert das Ablösen des Mantels 5 vom Kern 4. Ebenso ist gut ersichtlich, dass der Mantel 5 die Aussenflächen 6 des Kerns 4 vollständig umgibt, wodurch der Kern 4 keinen Kontakt zum Medium hat, sondern das Medium ausschliesslich den Mantel 5 des Tellers 3 berührt. Die Aussenschicht 12 des Mantels 5 bildet eine ebene Fläche um in geöffnetem Zustand keinen zusätzlichen Widerstand wie auch keine Hinterschnitte oder Kanten an denen sich Bakterien oder sonstige Verunreinigungen ansammeln könnten, aufzuweisen.

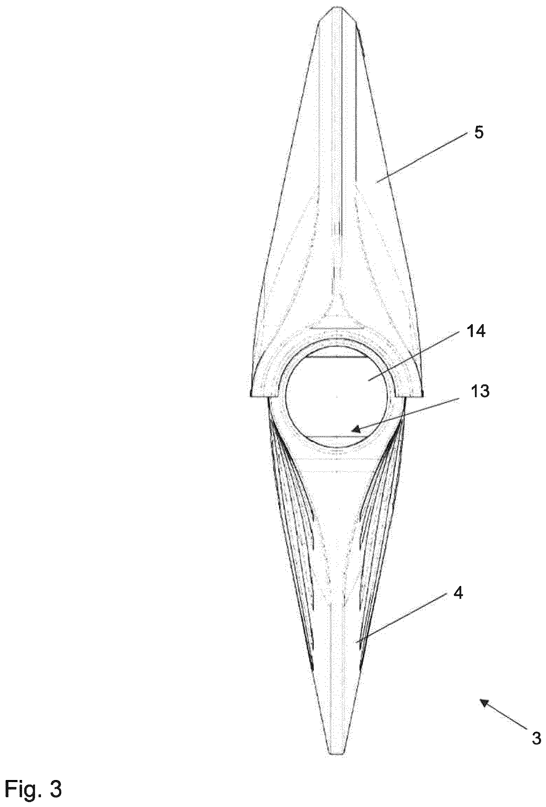

Fig. 3 zeigt eine Draufsicht eines Tellers 3 der erfindungsgemässen Absperrklappe 1, wobei auch hier der Teller 3 im Teilschnitt dargestellt ist und der Mantel 5 auf der einen Hälfte entfernt ist um den Kern 4 des Tellers 3 dazustellen. Der Teller 3 in der abgebildeten Ausführungsform weist eine Linsenform auf, wobei auch andere Formen des Tellers denkbar sind wie auch eine exzentrische Anordnung der Achse möglich ist. Die Bohrung 14 dient der Aufnahme der Achse 11 bzw. Steckachse welche durch den Teller 3 hindurchgesteckt wird um den Teller 3 im Gehäuse 2 anzuordnen. Gut ersichtlich ist der Formschluss 13 in der Bohrung 14, welcher das Schwenken des Tellers 3 über die Achse 11 ermöglicht. Der Formschluss 13 kann wie hier dargestellt über mindestens eine gerade Fläche erfolgen, wie aber auch über einen Vier- oder Mehrkant oder andere formschlüssige Verbindungsmöglichkeiten die vorzugsweise durch ein blosses Einstecken einer Steckachse umgesetzt werden können.

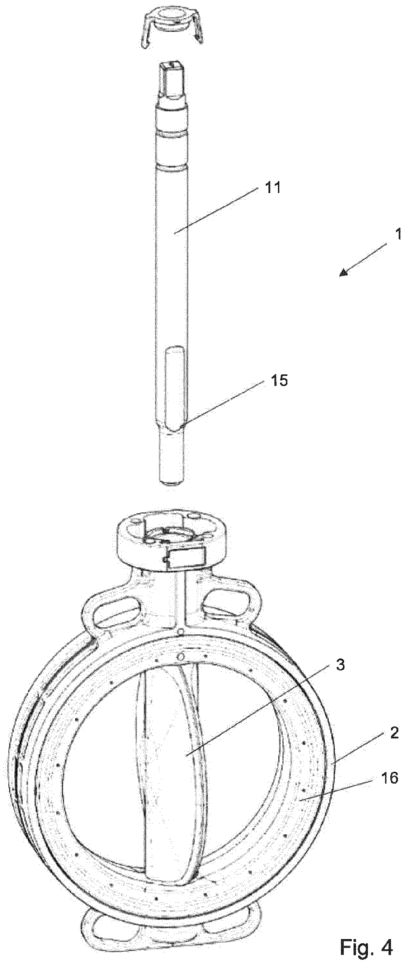

Fig. 4 zeigt die erfindungsgemässe Absperrklappe 1 in einer Explosionsansicht. Hier ist gut ersichtlich, dass der Teller 3 durch das einfache Einstecken der Achse bzw. Steckachse 11 im Gehäuse 2 befestigt wird. Der Formschluss 15 an der Achse 11 korrespondiert mit dem Formschluss 13 in der Bohrung 14 des Tellers 3. In Fig. 4 ist zum Erreichen eines Formschlusses 13/15 zwischen dem Teller 3 und der Achse 11 eine Fläche dargestellt, wie bereits aber erwähnt kann dies auch durch andere Formschlüsse erreicht werden.

Hergestellt wird die erfindungsgemässe Absperrklappe 1 indem ein einteiliges Gehäuse 2 hergestellt wird vorzugsweise aus Kunststoff im Spritzgussverfahren sowie ein Teller 3, wobei der Teller 3 im Zweikomponentenspritzgussverfahren hergestellt wird und die Montage der Absperrklappe 1 durch das blosse Einstecken einer Steckachse 11 durch den Teller 3 hindurch, wobei der Teller 3 im Gehäuse 2 angeordnet ist während des Einsteckens und die Steckachse 11 im Gehäuse gelagert ist.

### Bezugszeichenliste

- 1: Absperrklappe
- 2: Gehäuse
- 3: Teller
- 4: Kern
- 5: Mantel
- 6: Aussenfläche Kern
- 7: Oberseite Kern
- 8: Rippenstruktur
- 9: Aussparung
- 10: Steg
- 11: Achse / Steckachse
- 12: Aussenschicht Mantel
- 13: Formschluss Bohrung
- 14: Bohrung
- 15: Formschluss Achse
- 16: Dichtung

## Patentansprüche

1. Absperrklappe (1) zum Absperren oder Regeln eines Rohrleitung durchströmenden Mediums in einer Rohrleitung beinhaltend ein Gehäuse (2), wobei das Gehäuse (2) einteilig ausgebildet ist und vorzugsweise aus Kunststoff ist, einen Teller (3) und eine Achse (11), wobei der Teller (3) entlang der Achse (11) zwischen einer Offenstellung und einer Schliessstellung schwenkbar ist, wobei der Teller (3) einen Kern (4) aus Kunststoff und einen Mantel (5) aus Kunststoff aufweist, wobei der Kunststoff des Kerns (4) und der Kunststoff des Mantels (5) nicht identisch sind **dadurch gekennzeichnet, dass** der Kern (4) eine Rippenstruktur (8) mit Aussparungen (9) und Stegen (10) aufweist, wobei die
Aussparungen (9) zwischen den Stegen (10) durchgehend sind und die Achse (11) als im Gehäuse gelagerte
Steckachse und als ein separates Teil ausgebildet ist und durch den kompletten Teller hindurch ragt.

2. Absperrklappe (1) nach Anspruch 1, **dadurch gekennzeichnet, dass** der Mantel (5) die Aussenfläche (6) des Kerns (4) bzw. die Fläche des Kerns (4) welche mit dem Medium in Kontakt kommt, vollständig umgibt, wodurch der Kern (4) keinen Kontakt mit dem Medium erfährt.

3. Absperrklappe (1) nach Anspruch 1 oder 2, **dadurch gekennzeichnet, dass** der Teller (3) als Mehrkomponentenspritzgussteil ausgebildet ist.

4. Absperrklappe (1) nach Anspruch 1 bis 3, **dadurch gekennzeichnet, dass** der Kern (4) aus einem verstärkten Kunststoff gebildet ist, vorzugsweise faser- oder kugelverstärkt, speziell bevorzugt Glas- oder Karbonfasern.

5. Absperrklappe (1) nach Anspruch 1 bis 3, **dadurch gekennzeichnet, dass** der Mantel (5) aus einem Medium beständigen Kunststoff gebildet ist, vorzugsweise aus einem teilkristallinen oder amorphen Kunststoff ohne Verstärkung.

6. Absperrklappe (1) nach Anspruch 5, **dadurch gekennzeichnet, dass** die Steckachse (11) formschlüssig mit dem Teller (3) verbunden ist.

7. Verfahren zur Herstellung einer Absperrklappe (1) nach einem der Ansprüche 1 bis 6, wobei das Verfahren folgende Schritte aufweist:
• Herstellen eines einteiligen Gehäuses (2), vorzugsweise im Spritzgussverfahren,
• Herstellen eines Tellers (3), wobei der Teller (3) im Zweikomponentenspritzgussverfahren oder im Einlegeverfahren hergestellt wird,
• Montage des Tellers (3) im Gehäuse (2), wobei eine Achse (11) vorzugsweise Steckachse (11) durch das Gehäuse (2) und den Teller (3) hindurchgesteckt wird, wobei die Enden der Steckachse (11) im Gehäuse (2) gelagert werden und die Achse (11) die Schwenkachse des Tellers (3) bildet.

## Claims

1. Butterfly valve (1) for shutting off or regulating a medium, which flows through a pipeline, in a pipeline, containing a housing (2), wherein the housing (2) is of one-part design and is preferably composed of plastic, a disc (3) and a shaft (11), wherein the disc (3) can be pivoted along the shaft (11) between an open position and a closed position, wherein the disc (3) has a core (4) composed of plastic and a shell (5) composed of plastic, wherein the plastic of the core (4) and the plastic of the shell (5) are not identical, **characterized in that** the core (4) has a rib structure (8) with cutouts (9) and with webs (10), wherein the cutouts (9) between the webs (10) are continuous and the shaft (11) is designed as a plug-in shaft, which is mounted in the housing, and as a separate part and projects through the complete disc.

2. Butterfly valve (1) according to Claim 1, **characterized in that** the shell (5) completely surrounds the outer surface (6) of the core (4) or that surface of the core (4) which comes into contact with the medium, whereby the core (4) makes no contact with the medium.

3. Butterfly valve (1) according to Claim 1 or 2, **characterized in that** the disc (3) is designed as a multi-component injection-moulded part.

4. Butterfly valve (1) according to Claims 1 to 3, **characterized in that** the core (5) is formed from a plastic with reinforcement, preferably fibre or bead reinforcement, especially preferably glass fibres or carbon fibres.

5. Butterfly valve (1) according to Claims 1 to 3, **characterized in that** the shell (5) is formed from a medium-resistant plastic, preferably from a semicrystalline or amorphous plastic without reinforcement.

6. Butterfly valve (1) according to Claim 5, **characterized in that** the plug-in shaft (11) is connected in a form-fitting manner to the disc (3).

7. Method for producing a butterfly valve (1) according to one of Claims 1 to 6, wherein the method comprises the following steps:
• producing a one-part housing (2), preferably in an injection-moulding process,
• producing a disc (3), wherein the disc (3) is produced in a two-component injection-moulding process or in an insertion process,
• fitting the disc (3) in the housing (2), wherein a shaft (11), preferably a plug-in shaft (11), is plugged through the housing (2) and the disc (3), wherein the ends of the plug-in shaft (11) are mounted in the housing (2) and the shaft (11) forms the pivot shaft of the disc (3).

## Revendications

1. Vanne papillon (1) pour l'arrêt ou la régulation d'un milieu traversant une canalisation dans une canalisation, comprenant un boîtier (2), le boîtier (2) étant configuré en une seule pièce et étant de préférence en matière plastique, un disque (3) et un axe (11), le disque (3) pouvant pivoter le long de l'axe (11) entre une position ouverte et une position fermée, le disque (3) présentant un noyau (4) en matière plastique et une enveloppe (5) en matière plastique, la matière plastique du noyau (4) et la matière plastique de l'enveloppe (5) n'étant pas identiques, **caractérisée en ce que** le noyau (4) présente une structure nervurée (8) comprenant des évidements (9) et des entretoises (10), les évidements (9) étant continus entre les entretoises (10) et l'axe (11) étant configuré en tant qu'axe d'emboîtement logé dans le boîtier et en tant que pièce séparée et traversant l'ensemble du disque.

2. Vanne papillon (1) selon la revendication 1, **caractérisée en ce que** l'enveloppe (5) entoure entièrement la surface extérieure (6) du noyau (4) ou la surface du noyau (4) qui vient en contact avec le milieu, moyennant quoi le noyau (4) n'entre pas en contact avec le milieu.

3. Vanne papillon (1) selon la revendication 1 ou 2, **caractérisée en ce que** le disque (3) est configuré sous forme de pièce moulée par injection à plusieurs composants.

4. Vanne papillon (1) selon les revendications 1 à 3, **caractérisée en ce que** le noyau (4) est formé en une matière plastique renforcée, de préférence renforcée par des fibres ou des billes, de manière particulièrement préférée des fibres de verre ou de carbone.

5. Vanne papillon (1) selon les revendications 1 à 3, **caractérisée en ce que** l'enveloppe (5) est formée en une matière plastique résistant au milieu, de préférence en une matière plastique semi-cristalline ou amorphe sans renforcement.

6. Vanne papillon (1) selon la revendication 5, **caractérisée en ce que** l'axe d'emboîtement (11) est relié par complémentarité de forme au disque (3).

7. Procédé de fabrication d'une vanne papillon (1) selon l'une quelconque des revendications 1 à 6, le procédé comprenant les étapes suivantes :
- la fabrication d'un boîtier en une seule pièce (2), de préférence par le procédé de moulage par injection,
- la fabrication d'un disque (3), le disque (3) étant fabriqué par le procédé de moulage par injection à deux composants ou par le procédé d'insertion,
- le montage du disque (3) dans le boîtier (2), un axe (11), de préférence un axe d'emboîtement (11), étant emboîté à travers le boîtier (2) et le plateau (3), les extrémités de l'axe d'emboîtement (11) étant logées dans le boîtier (2) et l'axe (11) formant l'axe de pivotement du disque (3).
